# EUROPÄISCHE PATENTANMELDUNG

(11) **EP 0 953 991 A2**
(43) Veröffentlichungstag der Anmeldung: **03.11.1999**
(21) Anmeldenummer: 99108141.5
(22) Anmeldetag: 26.04.1999
(51) Int. Cl.: H01B 7/16, H01B 17/30, H01R 13/533

(54) **Mineralisolierte elektrische Leitung**

(30) Priorität: 30.04.1998 DE 19819283
(71) Anmelder: Heraeus Electro-Nite International N.V., 3530 Houthalen (BE)
(72) Erfinder: Häfele, Edelbert Dr., 76228 Karlsruhe (DE)
(74) Vertreter: Kühn, Hans-Christian

(57) **Zusammenfassung**

Die Erfindung betrifft eine mineralisolierte elektrische Leitung mit einem Mantelrohr, mehreren innerhalb des Mantelrohres verlaufenden und aus diesem heraus ragenden metallischen Leitern, die gegeneinander und gegen das Mantelrohr isoliert sind, wobei das Mantelrohr an mindestens einem Ende einen gasdichten Verschluß aufweist, durch den hindurch die Leiter geführt sind und wobei die aus dem Verschluß heraus ragenden Leiter im Anschluß an den Verschluß und über einen Teil ihrer Länge je einen Überzug aus Keramik, Glas und/oder Glaskeramik aufweisen. Um die korrosionsbeständigkeit der MI-Leitung zu verbessern, ist der jeweilige Überzug als Beschichtung des jeweiligen Leiters ausgebildet mit mindestens einer flüssigkeitsdichten Schicht im Anschluß an den Verschluß des Mantelrohres.

## Beschreibung

Die Erfindung betrifft eine mineralisolierte elektrische Leitung mit einem Mantelrohr, mehreren innerhalb des Mantelrohres verlaufenden und aus diesem heraus ragenden metallischen Leitern, die gegeneinander und gegen das Mantelrohr isoliert sind, wobei das Mantelrohr an mindestens einem Ende einen gasdichten Verschluß aufweist, durch den hindurch die Leiter geführt sind und wobei die aus dem Verschluß heraus ragenden Leiter im Anschluß an den Verschluß und über einen Teil ihrer Länge je einen Überzug aus mindestens einem Material der Gruppe Keramik, Glas, Glaskeramik aufweisen.

Eine derartige sogenannte MI-Leitung ist aus DE 195 09 132 A1 bekannt. Sie werden beispielsweise zu Meß- und Regelzwecken im Sensorikbereich von Kraftfahrzeugen eingesetzt und sind dort zum Beispiel im Abgassystem relativ hohen Temperaturen ausgesetzt. Die MI-Leitung weist einen Mantel auf, der aus einem Metallrohr gebildet ist. In einer Isolierung aus einem Mineralpulver verlaufen die Leiter. An der Austrittsöffnung der Leiter aus dem Metallrohr ist ein gasdichter Glasverschluß angeordnet. Auf die aus dem Metallrohr heraus ragenden Leitungen ist ein keramisches Formteil aufgeschoben. Bei derartigen Leitungen gibt es typischerweise Korrosionserscheinungen im Austrittsbereich der Leiter aus dem Metallmantel bzw. dem Verschluß oder auch dem Formteil. Diese Korrosionserscheinungen werden verursacht durch Kondensatbildung zwischen den (stromführenden) Leitungen. Es ist bekannt, korrosionsbeständige Leitungen aus Titan oder Tantal einzusetzen. Diese Materialien weisen eine hohe Korrosionsbeständigkeit auf, jedoch eine relativ schlechte Verformbarkeit und mechanische Festigkeit bei hoher thermischer Wechselbeanspruchung. Da die Leiter einer MI-Leitung häufig mittels Klemmwirkung kontaktiert werden, müssen sie gute Federeigenschaften aufweisen. Dies ist bei Titan und Tantal nur sehr bedingt der Fall. Beide Materialien sind auch nicht optimal geeignet für eine Schweißverbindung mit weiteren Kontaktwerkstoffen, beispielsweise auf einem Sensorchip. Die ebenfalls eingesetzten Edelstahlleitungen weisen diese Nachteile zwar nicht auf und sind darüber hinaus auch sehr gut herstellbar, sie sind jedoch bei Stromfluß sehr korrosionsanfällig.

Aus DE 27 17 765 A1 ist eine elektrische Leitung mit einem Mantelrohr, mehreren innerhalb des Mantelrohres verlaufenden und aus diesem herausragenden Leitern bekannt. Die Leiter sind gegeneinander und gegen das metallische Mantelrohr durch eine Isolationsbeschichtung isoliert. Das Mantelrohr ist an einem Ende mit einem Anschlußstück verbunden, wobei die Verbindung mit einem Verschluß gasdicht abgeschlossen ist. Das so beschriebene Verbindungsstück dient der flüssigkeitsdichten Verlegung beispielsweise von Unterwasserkabeln.

Aus GB 1 270 100 ist eine ähnliche elektrische Leitung bekannt. Diese ist als mineralisolierte Leitung ausgebildet, wobei die einzelnen Leiter eine übliche Isolationsbeschichtung aufweisen. Die Isolationsbeschichtungen dienen dem Korrosionsschutz und bestehen aus Kunststoff.

Die Aufgabe der Erfindung besteht darin, die aus dem Stand der Technik bekannten Nachteile der MI-Leitung zumindest teilweise zu beseitigen.

Diese Aufgabe wird erfindungsgemäß dadurch gelöst, daß der jeweilige Überzug als mindestens im Anschluß an den Verschluß flüssigkeitsdichte Beschichtung des jeweiligen Leiters und mindestens einschichtig ausgebildet ist. Als Beschichtung liegt dieser Überzug fest und dicht an den Leitern an. Die dichte Schicht oberhalb des Überzugs verhindert, daß Kondensat an den Leiter durch den Überzug hindurchdringen kann. Bei der erfindungsgemäßen Anordnung sind die Überzüge der Leiter mit den dichten Schichten voneinander getrennt und bilden einen zwischen ihnen angeordneten und zwischen zwei benachbarten Leitern offenen Zwischenraum, in dem sich das Kondensat sammelt. Das Kondensat bildet sich also nicht zwischen elektrisch leitenden Teilen aus, so daß ein elektrokorrosiver Effekt nicht entstehen kann. Durch eine derartige Verhinderung der Kondensatbildung zwischen elektrisch leitfähigen Oberflächen ist es möglich, beispielsweise Edelstähle als Leitungen der MI-Leitung zu verwenden, da dieser negative Effekt, den derartige Edelstahlleitungen aufweisen, durch die Erfindung beseitigt wird, während die oben genannten Vorteile der Edelstahlleitungen genutzt werden können. Die Herstellung eines thermisch stabilen, flüssigkeitsdichten und elektrisch isolierenden Überzugs ist nicht bei allen Materialkombinationen (Überzug/elektrischer Leiter/Glasverschluß) mittels einer einzigen Schicht realisierbar. Vielmehr hat sich gezeigt, daß ein Zweischichtsystem mit einer ersten guthaftenden, porösen Schicht und einer darüber angeordneten zweiten, dichten Schicht eine Optimierung der mechanischen und elektrischen Eigenschaften bei gleichzeitiger Erhöhung der Prozeßsicherheit erlaubt.

Vorteilhaft ist es, daß der Überzug eine erste Schicht aufweist, die mindestens an ihrer äußeren Oberfläche porös und/oder rauh ist und daß auf dieser Oberfläche eine flussigkeitsdichte Außenschicht angeordnet ist, wobei die mittlere Porengröße des Überzugs (bzw. dessen erster Schicht) und/oder die mittelere Rauhigkeit vorzugsweise mindestens 1 µm betragen. Dadurch wird die Haftung der dichten Schicht an dem Überzug verbessert. Die dichte Schicht ist zweckmäßigerweise aus einem Glas gebildet. Glas kann durch Erwärmung erweicht werden und so in die Poren bzw. Rauhigkeiten eindringen und dort fest haften. Zweckmäßig ist es, daß der Überzug mehrere erste Schichten aufweist, wobei auf der Oberfläche mindestens einer dieser Schichten mindestens eine flüssigkeitsdichte Außenschicht angeordnet ist.

Insbesondere beim Einsatz der MI-Leitung in der Kraftfahrzeug-Sensortechnik werden diese Leitungen hohen Temperaturen ausgesetzt, da sie beispielsweise unmittelbar im Abgassystem zur Kontaktierung von zum Beispiel Abgassensoren dienen können. Beim Einsatz von niedrigschmelzenden Gläsern als dichte Schicht können diese Gläser ohne weiteres erweicht werden, da ein Wegfließen aufgrund der Rauhigkeit der darunter liegenden Oberfläche des Überzugs verhindert wird. Der Überzug selbst kann beispielsweise aus Aluminiumoxid oder Spinell gebildet werden. Auch ein Überzug aus einem hochschmelzenden bzw. bei hoher Temperatur erweichendem Glas ist möglich. Die Schmelztemperatur bzw. der Erweichungspunkt des Überzugsmaterials sollte vorzugsweise mindestens 1500 °C betragen, während die dichte Schicht eine Schmelztemperatur bzw. einen Erweichungspunkt im Bereich zwischen etwa 900 °C und 1300 °C aufweisen sollte.

Die Länge des Überzugs mit der dichten Schicht ist vorzugsweise größer als die kapillare Steighöhe des Kondenswassers bzw. sonstigen sich der Erfahrung nach bildenden Kondensats. Diese Steighöhe kann berechnet oder durch wenige Versuche für die spezifischen Randbedingungen ermittelt werden.

Eine bei höheren Temperaturen entstehende höhere elektrische Leitfähigkeit des Überzugs bzw. des Materials der dichten Schicht ist unschädlich, da bei hohen Temperaturen kein Kondensat auftritt. Diese Kondensatbildung ist im wesentlichen ein Problem der Startphase eines Motors, wenn der Motor und das Abgassystem noch kalt sind, aber zur Kontrolle des Abgasstromes bereits der an der MI-Leitung angeordnete Sensor aktiviert ist, also durch die Leitungen der MI-Leitung ein Strom fließt. Bei extremen Einsatzbedingungen, bei denen die Leitfahigkeitsanforderungen sehr hoch sind, ist es zweckmäßig, daß die dichten Schichten der einzelnen Leiter auch an ihrem Fußpunkt voneinander getrennt sind, daß also die Verbindung der Oberflächen zweier Leiter nicht nur über die dichte Schicht, sondern durch ein zwischen den beiden dichten Schichten angeordnetes drittes Material, nämlich das Material des gasdichten Verschlusses des Mantelrohres, erfolgt.

Bei weniger hohen Leitfähigkeitsanforderungen können die Materialien der dichten Schichten der einzelnen Leiter an den Fußpunkten der Leiter, also an den Austrittsbereichen aus dem Verschluß, auch miteinander verbunden sein. Wesentlich in diesem Fall ist es, daß die freie Länge der Überzüge der einzelnen Leiter mit der dichten Schicht größer ist als die kapillare Steighöhe des Kondensats.

Nachfolgend wird ein Ausführungsbeispiel der Erfindung anhand einer Zeichnung näher erläutert. In der Zeichnung zeigt
Figur 1 ein Ende einer MI-Leitung mit zweischichtigen Überzügen über den Leitern,
Figur 2 ein Ende der MI-Leitung mit einschichtigen Überzügen über den Leitern.

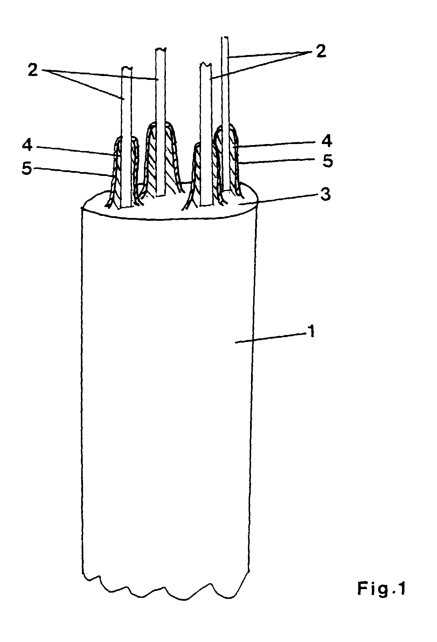

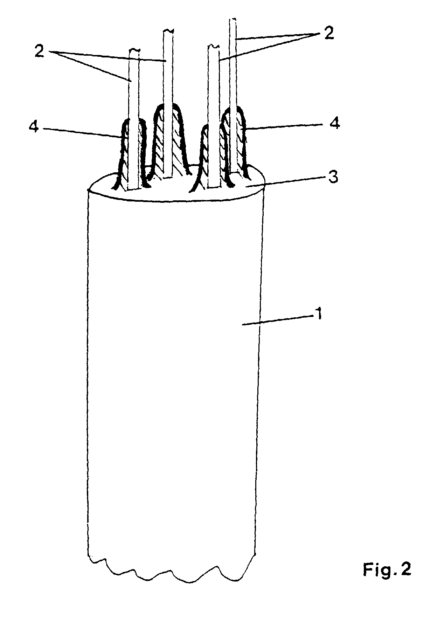

Das Mantelrohr 1 der MI-Leitung ist aus Stahl gebildet. Die Leiter 2 sind aus Inconel und innerhalb des Mantelrohres 1 in eine pulverförmige Mineralisolierung eingebettet. Die Austrittsfläche der Leiter 2 aus dem Mantelrohr 1 ist mit einem Glasverschluß als Verschluß 3 gasdicht abgedichtet. Die Leiter 2 weisen an ihren Austrittsenden aus dem Mantelrohr 1 in dem in Figur 1 gezeigten Beispiel einen Überzug 4 als Beschichtung mit einer ersten Schicht aus porösem Al₂O₃ auf. Der Überzug 4 ist an seiner äußeren Oberfläche von einem Glas, wie es beispielsweise aus DE 195 09 132 A1 bekannt ist, als Außenschicht 5 umschlossen, so daß ein Eindringen von Kondensat in die erste Schicht des Überzugs 4 und weiter bis an den Leiter 2 nicht möglich ist. In dem in Figur 2 gezeigten Beispiel besteht der Überzug 4 lediglich aus einer an ihrer Oberfläche dichten Schicht. Prinzipiell ist auch ein Mehrschichtaufbau möglich, bei dem mindestens eine der Schichten (dies kann auch eine Zwischenschicht sein) flüssigkeitsdicht ist. Auch eine Kombination mehrerer, in der Kombination dichter Schichten ist möglich.

Die Überzüge 4 der einzelnen Leiter gehen entweder an ihren Fußpunkten (am gasdichten Verschluß des Manterirohres) ineinander über oder sie sind dort getrennt.

Das Kondensat, das sich an den Fußpunkten der Leiter 2 im kalten Zustand des Motors bzw. in der Kaltstartphase gebildet hat, kann nicht bis zu den freien Oberflächen der Leiter 2 emporkriechen, so daß keine elektrisch leitende Verbindung zwischen den einzelnen Leitungen 2 über das Kondensat erfolgt.

## Patentansprüche

1. Mineralisolierte elektrische Leitung mit einem Mantelrohr, mehreren innerhalb des Mantelrohres verlaufenden und aus diesem heraus ragenden metallischen Leitern, die gegeneinander und gegen das Mantelrohr isoliert sind, wobei das Mantelrohr an mindestens einem Ende einen gasdichten Verschluß aufweist, durch den hindurch die Leiter geführt sind und wobei die aus dem Verschluß heraus ragenden Leiter im Anschluß an den Verschluß und über einen Teil ihrer Länge je einen Überzug aus mindestens einem Material der Gruppe Keramik, Glas, Glaskeramik aufweisen, dadurch gekennzeichnet, daß der jeweilige Überzug (4) als mindestens im Anschluß an den Verschluß (3) flüssigkeitsdichte Beschichtung des jeweiligen Leiters (2) und mindestens einschichtig ausgebildet ist.

2. Mineralisolierte elektrische Leitung nach Anspruch 1, dadurch gekennzeichnet, daß der Überzug (4) eine erste Schicht aufweist, die mindestens an ihrer äußeren Oberfläche porös und/oder rauh ist und auf dieser Oberfläche eine flüssigkeitsdichte Außenschicht (5) aufweist.

3. Mineralisolierte elektrische Leitung nach Anspruch 2 dadurch gekennzeichnet, daß die mittlere Porengröße des Überzugs (4) und /oder die mittlere Rauhigkeit mindestens 1 µm beträgt.

4. Mineralisolierte elektrische Leitung nach einem der Ansprüche 2 bis 3, dadurch gekennzeichnet, daß die flüssigkeitsdichte Außenschicht (5) aus einem Glas gebildet ist.

5. Mineralisolierte elektrische Leitung nach einem der Ansprüche 2 bis 4, dadurch gekennzeichnet, daß die Länge des Überzuges (4) mit der flüssigkeitsdichten Außenschicht (5) größer ist als die kapillare Steighöhe von Kondenswasser.

6. Mineralisolierte elektrische Leitung nach einem der Ansprüche 2 bis 5, dadurch gekennzeichnet, daß die flüssigkeitsdichten Außenschichten (5) der einzelnen Leiter (2) voneinander getrennt sind.

7. Mineralisolierte elektrische Leitung nach einem der Ansprüche 2 bis 6, dadurch gekennzeichnet, daß die Oberfläche des Überzugs (4) vollständig von der flüssigkeitsdichten Außenschicht (5) umschlossen ist.

8. Mineralisolierte elektrische Leitung nach einem der Ansprüche 2 bis 7,dadurch gekennzeichnet, daß der Überzug (4) mehrere erste Schichten aufweist, wobei auf der Oberfläche mindestens einer dieser Schichten mindestens eine flüssigkeitsdichte Außenschicht (5) angeordnet ist.
